# EUROPÄISCHE PATENTSCHRIFT

(11) **EP 4 488 173 B1**
(45) Veröffentlichungstag und Bekanntmachung des Hinweises auf die Patenterteilung: **22.04.2026**
(21) Anmeldenummer: 24185614.5
(22) Anmeldetag: 01.07.2024
(51) Int. Cl.: B64D 11/00

(54) **ZUSCHALTUNG EINER KRAFTUNTERSTÜTZUNG FÜR EIN FLUGZEUG-STAUFACH**
ACTIVATION OF A POWER SUPPORT FOR AN AIRCRAFT STORAGE COMPARTMENT
DISPOSITIF D'ALIMENTATION D'UN SUPPORT DE PUISSANCE POUR UN COMPARTIMENT DE RANGEMENT D'AÉRONEF

(30) Priorität: 06.07.2023 DE 102023117787
(43) Veröffentlichungstag der Anmeldung: 08.01.2025
(73) Patentinhaber: Diehl Aviation Laupheim GmbH, 88471 Laupheim (DE)
(72) Erfinder: Pfinder, Dirk, 88481 Balzheim (DE); Sießegger, Daniel, 88480 Achstetten (DE)
(74) Vertreter: Diehl Patentabteilung

(56) Entgegenhaltungen:
- EP-B1- 3 371 052
- AT-B- 410 536
- DE-A1- 102017 003 051

## Beschreibung

Die Erfindung betrifft eine Kraftunterstützung für das Schließen und Öffnen eines Staufaches für ein Flugzeug.

Aus der US 2014 / 0283336 A1 ist ein Verfahren und eine Vorrichtung zum Unterstützen der Bewegung eines Staufaches in eine geschlossene Position bekannt. Ein dem Staufach zugeordnetes Assistenzsystem kann als Reaktion auf eine Betätigung eines dem Staufach zugeordneten Schalters aktiviert werden. Das Assistenzsystem kann ein Vorspannsystem und einen Schalter umfassen. Das Vorspannsystem kann konfiguriert sein, um eine Kraft in einer Richtung zu einer geschlossenen Position für das Staufach zu erzeugen. Ein Schalter kann mit dem Vorspannsystem verbunden und so konfiguriert sein, dass er das Vorspannsystem aktiviert, wenn eine ausgewählte Gewichtsmenge in dem Staufach vorhanden ist. Die Kraft in Richtung der geschlossenen Position für das Staufach kann als Reaktion auf das Aktivieren des Assistenzsystems erzeugt werden.

Aus der DE 10 2020 000 834 A1 ist ein Staufach für ein Flugzeug bekannt, mit einem Staufachgehäuse zur Befestigung an einer Flugzeugstruktur, mit einem Schwenkfach zur Aufnahme von Staugut, wobei das Schwenkfach in dem Staufachgehäuse über ein Schwenklager in einem Schwenkbereich um eine Schwenkachse zwischen einer Offenstellung und einer Schließstellung schwenkbar gelagert ist, mit einer Kraftunterstützungsvorrichtung, wobei die Kraftunterstützungsvorrichtung eine Unterstützungskrafteinheit aufweist, wobei die Unterstützungskrafteinheit wahlweise in einen Aktivzustand oder einen Passivzustand bringbar ist, wobei die Unterstützungskrafteinheit in dem Aktivzustand eine in Richtung der Schließstellung wirkende Unterstützungskraft bereitstellt, wobei die Unterstützungskraft bei einer Schließbewegung des Schwenkfachs von der Offenstellung in Richtung der Schließstellung eine Kraftunterstützung an dem Schwenkfach bewirkt, wobei die Unterstützungskrafteinheit eine Spiralfeder zur Erzeugung der Unterstützungskraft aufweist, wobei die Spiralfeder in einem an dem Staufachgehäuse angeordneten Aufnahmegehäuse aufgenommen ist, wobei ein Federende der Spiralfeder in dem Aktivzustand mit dem Schwenkfach in Wirkverbindung bringbar ist, um das Schwenkfach mit der Unterstützungskraft zu beaufschlagen.

Aus der US 2011 / 0253714 A1 ist ein Hebehilfemechanismus bekannt, dieser dient zum Unterstützen des Anhebens einer beweglichen Komponente, die sich relativ zu einer festen Struktur zwischen einer abgesenkten und einer angehobenen Position bewegen kann. Der Hebehilfemechanismus umfasst eine Hebehilfefeder, die mit einer Federwelle verbunden ist, und eine verlängerte Schiene, in der ein Ende der Hebehilfefeder oder ein Ende der Federwelle beweglich gelagert ist. Eine Federsperre verhindert die Bewegung der Federwelle, wenn keine Hebeunterstützung erforderlich ist, und gibt die Federwelle frei, wenn eine Hebeunterstützung erforderlich ist.

Aus der EP 3 371 052 B1 ist ein Überkopf-Gepäckfach für ein Flugzeug bekannt, mit einem oberen Gepäckfachelement, mit einem unteren Gepäckfachelement, welches zwischen einer Schließ- und einer Offenstellung beweglich ist, mit einer Halteeinrichtung zum Halten des unteren Gepäckfachelements in dessen Schließstellung, mit einer Hebefeder zur Unterstützung der Bewegung des unteren Gepäckfachelements aus der Offenstellung in die Schließstellung, und mit einer Rückhalteeinrichtung zur Fixierung der Hebefeder im gespannten Zustand in der Offenstellung des unteren Gepäckfachelementes, wobei ein Betätigungsgriff zur Freigabe der Rückhalteeinrichtung in der Offenstellung des unteren Gepäckfachelementes vorgesehen ist, wobei das untere Gepäckfachelement unabhängig von dessen Beladungszustand, wahlweise mit Unterstützung durch die Hebefeder oder mit im gespannten Zustand fixierter Hebefeder von der Offenstellung in Richtung der Schließstellung beweglich ist.

Aus der DE 10 2017 003 051 A1 ist ein Überkopfstaufach eines Passagierflugzeuges bekannt, mit einem Träger und einem um eine Schwenkachse schwenkbaren Schwenkteil, das in einem Schwenkbereich mindestens zwischen einer Offenposition und einer Schließposition rotierbar ist, und mit einem Rückstellmittel, das an einem Griffpunkt des Schwenkteils eine Schließkraft in Richtung zur Schließposition hin bewirkt, bei dem die Schließkraft größer und entgegengerichtet der am Griffpunkt wirkenden Schwerkraft durch das unbeladene Schwenkteil ist, wobei das Staufach ein Haltemittel aufweist, durch das das Schwenkteil an der Offenposition haltbar ist.

Aufgabe der Erfindung ist es, Verbesserungen in Bezug auf eine Kraftunterstützung beim Schließen eines Staufaches anzugeben.

Die Aufgabe wird gelöst durch ein Staufach gemäß Patentanspruch 1 Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Staufach ist ein solches für ein Flugzeug, insbesondere ein Überkopfstaufach, insbesondere für ein Passagierflugzeug bzw. dessen Passagierkabine. Dabei wird von einem Flugzeug ausgegangen, welches eine mechanisch tragende Grundstruktur aufweist, zum Beispiel eine entsprechende Außenhülle, Spanten, usw.

Das Staufach enthält einen Grundkörper. Der Grundkörper ist an einer Grundstruktur des Flugzeuges fixierbar. In einem bestimmungsgemäßen Montagezustand im Flugzeug ist der Grundkörper und somit das gesamte Staufach vermittels seines Grundkörpers an der Grundstruktur im Flugzeug fest verbaut, d.h. fixiert. Das Staufach enthält ein Schwenkfach. Das Schwenkfach ist zwischen einer Offenstellung und einer Schließstellung relativ zum fixierten Grundkörper schwenkbar gelagert. Die Lagerung findet insbesondere am Grundkörper statt, kann jedoch ersatzweise auch an z.B. der Grundstruktur erfolgen.

Das Staufach enthält eine Federeinheit. Diese ist an dem Grundkörper einerseits und dem Schwenkfach andererseits angeordnet und daher mit beiden Teilen bewegungsgekoppelt, insbesondere an beiden Teilen gelenkig angebracht. Die Federeinheit ist zwischen einem Aktivzustand und einem Passivzustand schaltbar. Die Federeinheit enthält eine Federmittel, z.B. eine mechanische Feder.

Im Aktivzustand ist eine Entspannung, also Längsausdehnung, dabei Ausübung seiner Federkraft, des Federmittels ermöglicht. Die Entspannung des Federmittels führt zur Erzeugung einer Schließkraft / -unterstützung am Schwenkfach während einer Bewegung des Schwenkfaches in Richtung von der Offenstellung zur Schließstellung hin und umgekehrt. Mit anderen Worten liefert das Federmittel bzw. die Federeinheit Schließkraftunterstützung für das Schwenkfach, die Entspannung und Ausdehnung des Federmittels folgt der Schwenkbewegung. Das Federmittel ist also in der Offenstellung gespannt in der Schließstellung entspannt oder zumindest entspannter, je nachdem wie die Kraftunterstützungs-Kennlinien beabsichtigt und gewünscht sind. Auch kann die Kraftunterstützung vor Erreichen der Schließstellung enden usw.

Im Passivzustand ist die Entspannung des Federmittels dagegen verhindert. Folglich erfolgt im Passivzustand keine Kraftunterstützung für eine Schließbewegung des Schwenkfaches. Im Passivzustand ist also allenfalls ein Komprimieren des Federmittels oder ein Stillstand des Federmittels ermöglicht. Eine (einmalige) Kraftunterstützung bei einem Öffnen des Schwenkfaches ist möglich oder nötig, um das entspannte Federmittel ggf. auch im Passivzustand zu komprimieren, wenn dieses z.B. vorher im Aktivzustand war und noch zumindest teilweise entspannt / ausgedehnt ist.

In der Regel bzw. nach einmaligem Komprimieren ist im Passivzustand das Federmittel vollständig komprimiert bzw. gespannt und verbleibt dann in diesem Zustand bis zum Übergang in den Aktivzustand.

Das Staufach enthält eine Zuschalteinheit, welche mit der Federeinheit wirkungsgekoppelt ist. "Wirkungskopplung" bedeutet, dass die Zuschalteinheit die Umschaltung der Federeinheit zwischen Aktiv- und Passivzustand bewirken kann bzw. bewirkt. Die Zuschalteinheit enthält ein Zuschaltelement, welches aus einer Nullposition in eine Zuschaltposition bringbar ist. In der Nullposition ist die Federeinheit in den Passivzustand geschaltet. In der Zuschaltposition ist die Federeinheit in den Aktivzustand geschaltet.

Das Zuschaltelement ist zur Nullposition hin vorgespannt. Es kehrt also selbsttätig aus der Zuschaltposition in die Nullposition zurück, wenn es nicht davon abgehalten wird. Abhalten kann z.B. darin bestehen, dass ein Nutzer das Zuschaltelement händisch in der Zuschaltposition hält.

Die Zuschalteinheit weist ein Arretiermittel für das Zuschaltelement in der Zuschaltposition auf. Das Arretiermittel ist auf die Arretierung des Zuschaltelements hin vorgespannt. Sobald das Zuschaltelement in die Zuschaltposition gelangt, arretiert also das Arretiermittel das Zuschaltelement in der Zuschaltposition. Das Arretiermittel bewirkt also, dass das Zuschaltelement in der Zuschaltposition arretiert ist und nicht mehr in die Nullposition zurückkehrt. Die Arretierung erfolgt mit anderen Worten automatisch bei Erreichen der Zuschaltposition. Das Zuschaltelement ist also zu einem selbsttätigen Arretieren ausgebildet. Das Arretiermittel kann unmittelbar am Zuschaltelement angreifen oder auch mittelbar an einem mit dem Zuschaltelement bewegungsgekoppelten Element, z.B. einer Hebelmechanik.

Die Zuschalteinheit enthält ein Löseelement für das Arretiermittel. Das Löseelement ist aus einer Ruhestellung in eine Lösestellung betätigbar. In der Ruhestellung ist ein Arretieren des Zuschaltelements in der Zuschaltposition durch das Arretiermittel ermöglicht. In der Lösestellung ist ein Arretieren des Zuschaltelements durch das Arretiermittel verhindert. Das Löseelement ist zur Ruhestellung hin vorgespannt. D.h. das Löseelement muss willentlich in die Lösestellung gebracht werden, z.B. durch händische Bewegung durch eine Person oder anfahren gegen einen Anschlag, um die Arretierung zu verhindern. Wir das Löseelement "losgelassen", kehrt es in die Ruhestellung zurück. "Verhinderung" der Arretierung bedeutet, dass in der Lösestellung sowohl eine bestehende Arretierung gelöst wird als auch eine erneute Arretierung verhindert ist.

Das erfindungsgemäße Staufach weist daher folgende Bedieneigenschaften auf:
Zunächst wird von einem Passivzustand der Federeinheit und einem vollständig komprimierten Federmittel ausgegangen. Das Zuschaltelement befindet sich in der Nullposition, das Löseelement in der Ruhestellung. Das Schwenkfach ist dann ohne jegliche Kraftunterstützung durch die Federeinheit zwischen der Offenstellung und der Schließstellung bewegbar bzw. schwenkbar.

Durch Betätigung des Zuschaltelements in die Zuschaltposition wird die Federeinheit in den Aktivzustand geschaltet, sodass fortan das Schwenkfach mit Hilfe von Kraftunterstützt durch die Federeinheit zwischen Offenstellung und Schließstellung bewegt werden kann. Das Arretiermittel arretiert automatisch das Zuschaltelement in der Zuschaltposition, der Aktivzustand bleibt erhalten.

Erst wenn das Löseelement in die Lösestellung gebracht wird, wird die Arretierung des Zuschaltelements in der Zuschaltposition aufgehoben, das Zuschaltelement kehrt in die Nullposition zurück, wodurch die Federeinheit in den Passivzustand gelangt und die Kraftunterstützung des Schwenkfaches endet. Gegebenenfalls muss hierzu noch einmal das Federmittel komprimiert werden, indem das Schwenkfach von der Schließstellung in die Offenstellung gegen die Kraft des Federmittels bewegt wird.

Gemäß der Erfindung ist erreicht, dass durch Bewegen des Zuschaltelements in die Zuschaltposition die Kraftunterstützung eingeschaltet und aktiviert bleibt, bis diese durch Betätigung des Löseelements wieder aufgehoben wird. All dies kann rein mechanisch durch Feder- / Spannelemente und Mechanik erreicht werden. Weder ist hierzu eine elektrische Versorgung des Staufaches noch eine irgendwie geartete Wiegevorrichtung / Wiegemaßnahme am Staufach nötig. Das Staufach lässt sich einfach realisieren.

In einer bevorzugten Ausführungsform ist die Zuschalteinheit eine Druckknopfeinheit und das Zuschaltelement ist ein Druckknopf. Der Druckknopf ist aus der Nullposition in die Zuschaltposition bringbar, in dem dieser gedrückt wird, also drückbar ist. Das Drücken erfolgt insbesondere entlang einer geraden Bewegungsbahn. Eine Druckknopf-Lösung, welche im gedrückten Zustand (Zuschaltposition) arretiert wird, ist besonders komfortabel, um die Federeinheit im Aktivzustand zu halten bzw. zu arretieren.

In einer bevorzugten Ausführungsform ist die Zuschalteinheit über ein Zugmittel mit der Federeinheit wirkungsgekoppelt. Insbesondere zieht die Zuschalteinheit das Zugmittel, in dem das Zuschaltelement aus der Nullposition in die Zuschaltposition gebracht wird, also zum Beispiel der Druckknopf gedrückt wird. Ein entsprechendes Zugmittel, zum Beispiel in Form eines Seilzuges oder Bowdenzuges lässt sich besonders einfach und zuverlässig in ein Staufach integrieren.

In einer bevorzugten Ausführungsform ist Zuschaltelement durch eine Rückstellkraft von außerhalb der Zuschalteinheit von der Zuschaltposition zur Nullposition hin vorgespannt. Die Quelle / der Verursacher der Kraft, z.B. ein Feder- oder Spannelement, liegt also außerhalb der Zuschalteinheit. Die Rückstellkraft wird insbesondere über das oben genannte Zugmittel von außerhalb in die Zuschalteinheit eingetragen. Die Rückstellkraft ist hierbei insbesondere in der Federeinheit, insbesondere dem Federmittel erzeugt. Zum Beispiel wird die Rückstellkraft über einen federbelasteten Hebel in bzw. an einer Gasdruckfeder erzeugt, wie sie weiter unten erläutert wird. Somit entfällt die Notwendigkeit, in der Zuschalteinheit ein eigenes Rückstell- bzw. Feder- / Spannelement für das Zuschaltelement vorzusehen.

In einer bevorzugten Ausführungsform enthält die Federeinheit als Federmittel eine Gasdruckfeder. Gasdruckfedern eignen sich besonders gut als Federmittel in der Federeinheit, da diese durch Pins / Ventile einfach selbst von einem Aktiv- in einen Passivzustand schaltbar sind. Sonstige Maßnahmen in der Federeinheit, um diese insgesamt aktiv / passiv zu schalten, sind dann nicht mehr nötig.

Ein derartiges Ventil / Pin kann wiederum selbst durch Spannmittel / Federn vorgespannt werden. Diese können dann genutzt werden, um diese Federkraft / Spannkraft zur Zuschalteinheit zu übertragen und dort das Zuschaltelement zur Nullposition hin vorzuspannen. Somit ergibt sich insgesamt ein sehr einfacher Aufbau des Staufaches.

In einer bevorzugten Variante dieser Ausführungsform ist also die Federeinheit dadurch zwischen Aktiv und Passivzustand umgeschaltet bzw. wird umgeschaltet, dass ein federnd vorgespanntes Stellelement (Hebel / Ventil / Pin) der Gasdruckfeder betätigt (bewegt / geöffnet oder geschlossen) ist oder wird. Somit lässt sich die Umschaltung zwischen Aktiv und Passivzustand besonders einfach und zuverlässig realisieren und die federnde Vorspannung synergetisch auch in der Zuschalteinheit nutzen.

In einer bevorzugten Ausführungsform weist der Grundkörper oder die Grundstruktur ein Gegenelement für das Löseelement auf bzw. ist ein solches dort integriert. Wenigstens - insbesondere ausschließlich - in der Schließstellung des Schwenkfaches ist das Löseelement durch das Gegenelement in die Lösestellung gebracht. Hierdurch wird erreicht, dass wenigstens durch Verbringen des Schwenkfaches in die Schließstellung oder optional durch sonstigen Kontakt zwischen Gegenelement und Löseelement, das Löseelement in die Lösestellung gebracht wird. Dadurch erfolgt das Lösen der Arretierung / des Arretiermittels und die Rückkehr des Zuschaltelements in die Nullposition und damit die Rückkehr in den Passivzustand der Federeinheit.

Die Kraftunterstützung am Schwenkfach wird somit in der Schließstellung automatisch deaktiviert, wobei jedoch eine sich noch anschließende Öffnungsbewegung gegebenenfalls kraftunterstützt erfolgt, wenn nämlich das Federelement noch expandiert ist und durch Bewegung in die Offenstellung erst noch gegen seine Federkraft komprimiert werden muss, wie oben erläutert wurde.

Ein derartiges Gegenelement kann zum Beispiel als Anschlagelement für ein Löseelement (z.B. Kipphebel, siehe unten) am Grundkörper ausgeführt sein.

In einer bevorzugten Ausführungsform ist das Löseelement wenigstens in der Offenstellung des Schwenkfaches für eine händische Betätigung von einem Außenraum außerhalb des Staufaches zugänglich. Die Zugänglichkeit bezieht sich wenigstens darauf, das Löseelement händisch zur Lösestellung hin bewegen zu können. Somit ist auch händisch durch Betätigen des Löseelements schlussendlich eine Rückkehr der Federeinheit in den Passivzustand auslösbar. Mit anderen Worten kann die Kraftunterstützung am Schwenkfach somit auch händisch deaktiviert werden.

In einer bevorzugten Ausführungsform ist das Löseelement ein Kipphebel, der zwischen der Lösestellung und der Ruhestellung schwenkbarer ist. Ein derartiger Kipphebel ist einerseits leicht händisch bedienbar; andererseits auch leicht durch ein Gegenelement betätigbar.

In einer bevorzugten Ausführungsform enthält das Arretiermittel ein quer zu einer Bewegungsrichtung des Zuschaltelements (Bewegung zwischen Zuschalt- und Nullposition, insbesondere Gerade) bewegbares Rastmittel, z.B. einen zum Zuschaltelement hin vorstehenden Pin. Das Rastmittel ist auf das Zuschaltelement und damit die Arretierung des Zuschaltelements hin vorgespannt. Das Zuschaltelement enthält ein Gegenrastmittel für das Rastmittel, z.B. eine Ausnehmung / Sacklochbohrung / Rastkante etc. zur Wechselwirkung mit / Aufnahme des Pins. Das Arretieren des Zuschaltelements erfolgt durch Einrasten von Rastmittel und Gegenrastmittel in der Zuschaltposition, ist also hierdurch bewirkt. Durch das Löseelement - wenn sich dieses in Lösestellung befindet - sind Rastmittel und Gegenrastmittel dagegen unverrastbar (und unverrastet) auseinandergehalten; ein Verrasten und Arretieren somit verhindert.

Eine derartige Mechanik-Lösung lässt sich besonders einfach in der Zuschalteinheit realisieren.

In einer bevorzugten Ausführungsform enthält das Staufach keine elektrischen Komponenten. Mit anderen Worten benötigt das Staufach keinerlei elektrische Komponenten und wird hierdurch besonders einfach, nämlich rein mechanisch ausführbar. Alternativ oder zusätzlich ist die Umschaltung zwischen Aktiv- und Passivzustand, also die De- / aktivierung der Schließkraftunterstützung durch die Federeinheit im Staufach unabhängig von einer Beladung des Staufaches. Mit anderen Worten ist hierdurch das Staufach besonders einfach ausgeführt, da keinerlei Wiegeeinrichtungen bzw. derartige Maßnahmen notwendig sind.

Dennoch bietet das Staufach eine komfortable und wahlfrei zu oder abschaltbare Kraftunterstützung für das Öffnen und Schließen des Schwenkfaches.

Die Aufgabe der Erfindung wird auch gelöst durch ein Flugzeug gemäß Patentanspruch 12. Dieses enthält die oben genannte Grundstruktur sowie das erfindungsgemäße Staufach. Der Grundkörper ist dabei wie oben erläutert an der Grundstruktur des Flugzeuges fixiert.

Das Flugzeug und zumindest ein Teil dessen möglicher Ausführungsformen sowie die jeweiligen Vorteile wurden sinngemäß bereits im Zusammenhang mit dem erfindungsgemäßen Staufach erläutert.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergibt sich insbesondere ein arretierbarer Druckknopf mit Gasdruckfeder für ein absenkbares Gepäckfach in einer Flugzeugkabine.

Es ergibt sich eine mechanische Kraftunterstützung mit einem arretierbaren Druckknopf und einer Gasdruckfeder, welche durch Betätigung des Druckknopfs auf Dauerschaltung gestellt wird, bis eine definierte Bewegung (Schwenkfach in Schließstellung) vollbracht ist.

Die Erfindung beruht auf der Erkenntnis, dass eine sehr große Handkraft zum Schließen des Gepäckfachs notwendig ist, wenn dieses voll beladen ist. Grundidee der Erfindung ist eine arretierte Schaltung der Gasdruckfeder, um Auslösung (Schalten in den Aktivzustand) und Schließvorgang (Schwenkfach von der Offenstellung zur Schließstellung hin bewegen) zu entkoppeln

Gemäß der Erfindung sind keine vollautomatischen Lösungen mit Elektromotoren, keine Kraftunterstützungslösungen mit elektronischen Wiegeeinheiten nötig. Auch muss aufgrund der Arretierung ein Schalter (Zuschaltelement) während des Starts des Schließvorgangs nicht gehalten werden. Durch Verzicht auf vollautomatische Lösungen, die mit einem Elektromotor die erforderliche Hubarbeit verrichten, sind hohen Kosten, hohes Gewicht und elektrischer Leistungsbedarf der Einheiten vermieden. Keine kraftunterstützenden Systeme, die auf einer elektronischen Wiegeeinheit und einer elektrischen Zuschaltung der mechanischen Kraftspeicher beruhen, sind nötig. So ist auch diesbezüglich ein hoher Preis und der Aufwand für die elektrische Versorgung und die Gefahr einer Fehlauslösung vermieden.

Gemäß der Erfindung ergibt sich insbesondere: Eine Gasdruckfeder (Federmittel) entriegelt (Aktivzustand), wenn ein Ventil am Kolben über einen Bowdenzug (Zugmittel) betätigt wird. Dies erfordert eine gewisse Kraft, abhängig vom Hebelarm des Betätigungshebels und des Gasdrucks. Damit die Gasdruckfeder nicht wieder verriegelt, muss das Ventil solange geöffnet sein, bis ein bestimmter Hub (Expansion des Federmittels) erfolgt ist. Hierbei wird die Arretierung (durch das Arretiermittel) des Schalters (Zuschaltmittel) benötigt, damit kann mit einmaliger Betätigung (Zuschaltmittel wird in die Zuschaltposition gebracht) die Kraft auf das Ventil gebracht und somit die Gasdruckfeder dauerhaft entriegelt werden, ohne sich zu bewegen (zu expandieren). Nun kann der Bediener sich zeitunabhängig auf das reine Schließen (des Schwenkfaches), das nun kraftunterstützt stattfindet, konzentrieren.

Im Gehäuse (Zuschalteinheit) des Druckknopfs (Zuschaltelement) befindet sich ein Schlitten mit einem Pin (Rastmittel) der federgelagert ist und in einer bestimmten Stellung (Zuschaltposition) des Druckknopfs diesen arretieren lässt.

Wenn das Gepäckfach (Schwenkfach) geschlossen wird stellt sich der Druckknopf erst wieder in die Grundstellung (Nullposition), wenn das Gepäckfach komplett geschlossen wurde (Schließstellung). Dies geschieht über einen installierten Winkel (Gegenelement für Löseelement) der am Gehäuse des Gepäckfachs (Grundkörper) montiert ist. Dieser drückt auf ein Hebelsystem (das hiermit verbundene Löseelement), das sich im Gehäuseinneren (Zuschalteinheit) befindet. Dieser Hebel (Löseelement) löst wiederrum eine Bewegung im federbelasteten Schlitten aus, der sich in die definierte hintere Stellung (Lösen der Arretierung) begibt und durch die spezifizierte Vorspannung, die mittels Bowdenzug von Gasdruckfeder zum Druckknopfmechanismus übertragen, wird stellt sich der Druckknopf wieder in die Grundstellung (Nullposition).

Beim nächsten Öffnungsschritt des Gepäckfachs wird die Kolbenstange der Gasdruckfeder wieder mittels Bewegung komprimiert (das Federmittel gespannt). Die Komprimierung erfolgt über eine Kugel an der Gasdruckfeder und einem Haltersystem (Kugelaufnahme) am Gepäckfach (Schwenkfach), das eine Aufnahme für diese Kugel aufweist.

Bei dieser Komprimierung wird die Energie wieder in der Gasdruckfeder gespeichert und die Kolbenstange arretiert (Passivzustand) bis zur nächsten Betätigung des Druccknopfs.

Eine Betätigung des Druckknopfes lässt sich über den versteckten Hebelmechanismus (Löseelement) der etwas aus dem Gehäuse (Zuschalteinheit) herausragt, wieder in Grundstellung (Nullposition) setzen, "RESET".

Die Kraftunterstützungseinheit (Federeinheit) unterstützt nur bis zu einem spezifizierten Punkt (Schwenkbereich, vor Erreichen der Schließstellung) um ein Einklemmen der Finger zwischen. Gepäckfach (Schwenkfach) und Gehäuse (Grundkörper) zu verhindern Gemäß der Erfindung ergibt sich eine rein mechanische Lösung mit einem Druckknopf, der eine Z-Bewegung (Gerade) aufweist, der sich nur an einem bestimmten Punkt (Zuschaltposition) arretieren lässt, im Gehäuseinneren mittels Hebelbewegungen und Federkraftunterstützung. Dieser Druckknopf stellt sich erst in die Grundstellung (Nullposition) zurück, wenn das Gepäckfach ganz geschlossen ist und im Gepäckfachgehäuse einrastet (Schließstellung). Die Bedienung wird einfacher, da die Betätigung des Schalters (Zuschaltelement) und das Schließen des Gepäckfachs nun zwei unabhängiges Schritte sind bzw. sein können.

Gemäß der Erfindung ergibt sich eine rein mechanische Kraftunterstützung mittels Gasdruckfeder in Kombination mit einem hochintegrierten Druckknopf, der nur an einer definierten Stelle (Zuschaltposition) arretiert bzw. freigibt. Die Gasdruckfeder verfügt über einen integrierten Einklemmschutz beim Schließvorgang des Gepäckfachs.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: ein Staufach in einem Flugzeug mit Schwenkfach in Offenstellung in teiltransparenter Seitenansicht,
- Figur 2: einen Ausschnitt aus dem Staufach aus Figur 1 mit Schwenkfach in Schließstellung und Federeinheit im Aktivzustand und im Passivzustand,
- Figur 3: die Zuschalteinheit aus Figur 1 mit Zuschaltelement in Nullposition und Löseelement in Ruhestellung,
- Figur 4: die Zuschalteinheit aus Figur 3 mit Zuschaltelement in Zuschaltposition und Löseelement in Lösestellung,
- Figur 5: die Zuschalteinheit aus Figur 4 mit Löseelement in Ruhestellung,
- Figur 6: einen Ausschnitt des Federelements der Federeinheit aus Figur 1 im Querschnitt,
- Figur 7: das Staufach aus Figur 1 mit Schwenkfach in Schließstellung und Löseelement in Lösestellung,
- Figur 8: einen vergrößerten Ausschnitt aus Figur 7 mit der Zuschalteinheit und dem Gegenelement für das Löseelement,
- Figur 9: ein weiter vergrößertes Detail aus Figur 8 in perspektivischer Ansicht,
- Figur 10: ein Detail aus Figur 7 mit einem Ausschnitt der Federeinheit und der Kugelaufnahme.

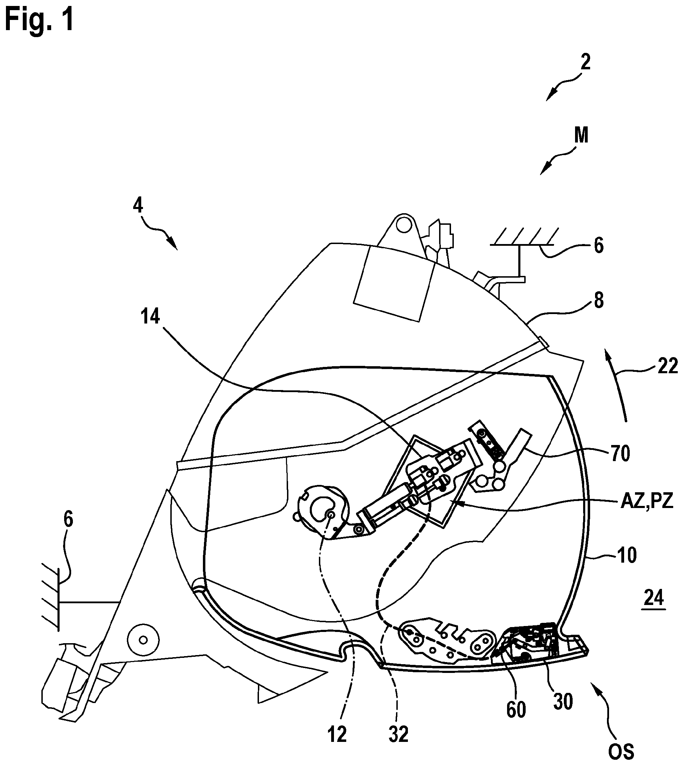

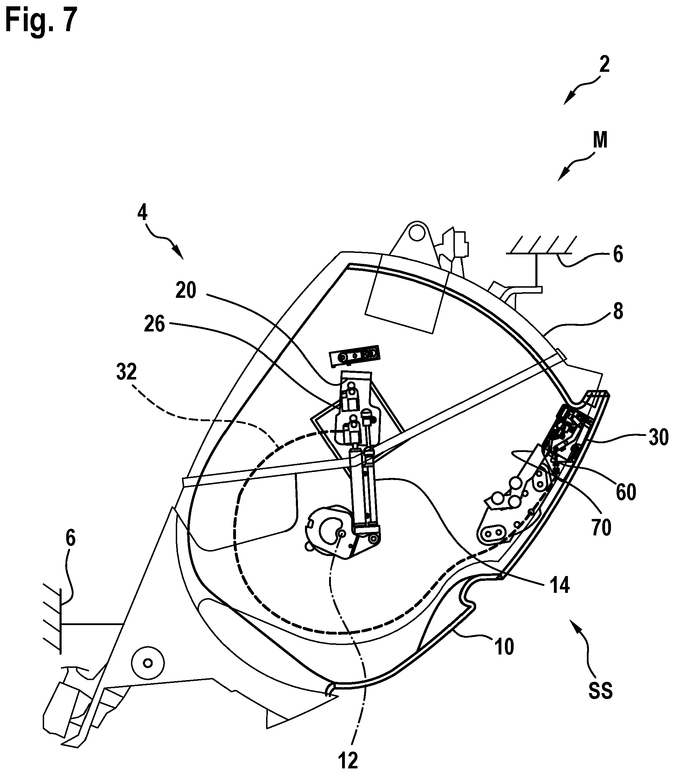

Figur 1 zeigt den Ausschnitt aus einem Flugzeug 2, nämlich ein Staufach 4, welches an einer Grundstruktur 6 (hier nur symbolisch angedeutet) des Flugzeuges 2 in einem Montagezustand M fixiert ist. Das Staufach 4 enthält einen Grundkörper 8. Das Staufach 4 ist dadurch an der Grundstruktur 6 fixiert, dass der Grundkörper 8 an dieser fixiert ist. Das Staufach 4 enthält auch ein Schwenkfach 10, welches zwischen einer in Figur 1 gezeigten Offenstellung OS und einer in Figur 7 gezeigten Schließstellung SS schwenkbar gelagert ist. Die Schwenklagerung ist durch eine Lagerung des Schwenkfaches 10 um eine Schwenkachse 12 am Grundkörper 8 realisiert.

Das Staufach 4 enthält eine Federeinheit 14, welche sowohl mit dem Grundkörper 8 als auch mit dem Schwenkfach 10 verbunden und dadurch zwischen beiden bewegungsgekoppelt ist bzw. sich zwischen beiden abstützt. Die Federeinheit 14 ist zwischen einem Aktivzustand AZ und einem Passivzustand PZ schaltbar, wie weiter unten erläutert wird. Figur 1 zeigt die Situation für beide Zustände. Figur 1 zeigt einen Zustand, in welchem das Staufach 4 bzw. Gepäckfach geöffnet und bereit zum Beladen ist. Die Federeinheit 14 ist eine Kombination eines Federmittels 16 in Form einer Gasdruckfeder und eines Öldämpfers 18.

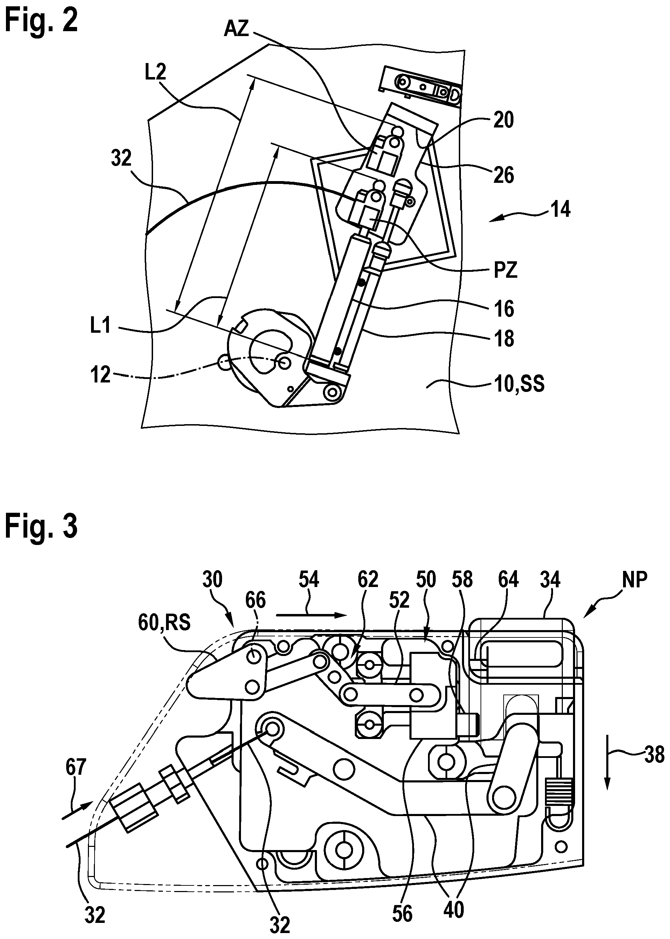

Figur 2 zeigt die Federeinheit 14 im Detail, wobei sich hier das Schwenkfach 10 in der Schließstellung SS befindet. Die Federeinheit 14 ist daher gegenüber Figur 1 expandiert. Dies trifft für den Öldämpfer 18 stets zu. Im Passivzustand PZ verbleibt jedoch das Federmittel 16 stets komprimiert, weist also die Länge L1 auf. Eine Kugel am Ende des Federmittels 16 entfernt sich von einer Kugelaufnahme 20.

Im Aktivzustand AZ dagegen, expandiert auch das Federmittel 16 auf die Länge L2, so dass die Kugel mit der Kugelaufnahme 20 in Eingriff steht. So kann die Federkraft des Federmittels 16 über die Kugelaufnahme 20 auf das Schwenkfach 10 übertragen werden. Beide Sachverhalte sind symbolisch in Figur 2 gemeinsam angedeutet bzw. gezeichnet, das Ende des Federmittels 16 ist daher doppelt dargestellt.

Im Passivzustand PZ bei Länge L1 verursacht das Federmittel 16 und damit die Federeinheit 14 keinerlei Unterstützungskraft für das Schwenkfach 10. Im Aktivzustand AZ hingegen stützt sich das Federmittel 16 an der Kugelaufnahme 20 ab und liefert somit eine Unterstützungskraft für das Schwenkfach 10 bei einer Schließbewegung 22 (in Figur 1 durch einen Pfeil angedeutet) durch Entspannen des Federmittels 16 und entgegen der Schließbewegung 22 durch Komprimieren des Federmittels 16.

Figur 2 zeigt also insgesamt ein nicht näher erläutertes Haltersystem 26 mit Kugelaufnahmen für eine Gasdruckkugel und eine Dämpferkugel.

Figur 1 zeigt, dass das Staufach 4 auch eine Zuschalteinheit 30 enthält, welche mit der Federeinheit 14 wirkungsgekoppelt ist, indem die Zuschalteinheit 30 die Schaltung der Federeinheit 14 zwischen Aktivzustand AZ und Passivzustand PZ bewirkt. Die Wirkungskopplung erfolgt durch ein Zugmittel 32, hier einen Bowdenzug, der in Figur 1 lediglich durch eine gestrichelte Linie angedeutet ist.

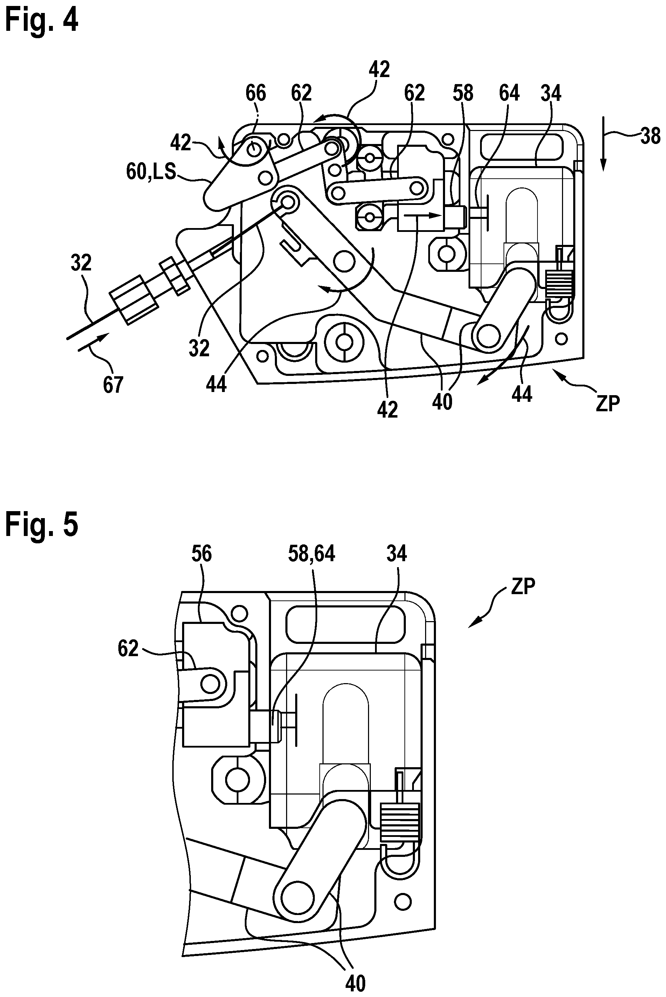

Figur 3 zeigt die Zuschalteinheit 30 im Detail. Diese enthält ein Zuschaltelement 34, hier einen Druckknopf. Das Zuschaltelement 34 ist aus einer in Figur 3 gezeigten Nullposition NP in eine in Figur 4 gezeigte Zuschaltposition ZP bringbar, hier durch Drücken des Druckknopfes in eine Bewegungsrichtung 38, die als Druckrichtung des Druckknopfes eine Gerade darstellt, in Figur 3 durch einen Pfeil angedeutet. In der Nullposition NP ist durch die Wirkungskopplung die Federeinheit 14 in den Passivzustand PZ, in der Zuschaltposition ZP in den Aktivzustand AZ geschaltet. Die Wirkungskopplung erfolgt über eine hier nicht näher erläuterte Hebelmechanik 40 und das Zugmittel 32. Das Zuschaltelement 34 ist zur Nullposition NP hin vorgespannt, vorliegend ursächlich durch die Federeinheit 14, wie weiter unten erläutert wird. Durch die Bewegungskopplung über die Hebelmechanik 40 und das Zugmittel 32 wird die Vorspannung auf das Zuschaltelement 34 übertragen. Das Zugmittel 32 ist hier also ein Bowdenzug zur Gasdruckfeder. Die Zuschalteinheit 30 kann hier auch als "Druckknopfgehäuse" bezeichnet werden.

Die Zuschalteinheit 30 enthält ein Arretiermittel 50, hier einen Schlitten 56 mit einem Rastmittel 58 in Form eines Pins. Mit Hilfe eines Spannelements 52 in Form einer Feder ist das Arretiermittel 50 in einer Spannrichtung 54 (angedeutet durch einen Pfeil) auf das Zuschaltelement 34 hin vorgespannt. Das Arretiermittel 50 dient dazu, das Zuschaltelement 34 in der Zuschaltposition ZP zu arretieren. Hierzu weist das Zuschaltelement 34 ein zum Rastmittel 58 passendes Gegenrastmittel 64 auf, hier in Form einer Sacklochbohrung in dem Druckknopf. Durch das Spannelement 52 ist das Arretiermittel 50 also auf eine Arretierung (wenn sich das Zuschaltelement 34 in der Zuschaltposition ZP befindet) hin vorgespannt. Der Schlitten 56 ist hier also ein federbelasteter Schlitten mit Pin.

Die Zuschalteinheit 30 enthält ein Löseelement 60 für das Arretiermittel 50 für das Arretiermittel 50. Das Löseelement 60 ist aus einer in Figur 3 gezeigten Ruhestellung RS in eine Lösestellung LS gemäß Figur 4 betätigbar. In der Ruhestellung RS ist ein Arretieren des Zuschaltelements 34 durch das Arretiermittel 50 ermöglicht, in der Lösestellung LS ist diese Arretierung verhindert bzw. wird eine bestehende Arretierung gelöst. Löseelement 60 und Arretiermittel 50 sind hierzu über ein Hebelsystem 62 miteinander bewegungsgekoppelt. Das Löseelement 60 ist hier ein zwischen der Lösestellung LS und der Ruhestellung RS um die Schwenkachse 66 schwenkbarer Kipphebel. Das Löseelement 60 kann auch als "Hebel zum Entriegeln des Druckknopfes" bezeichnet werden. In Figur 3 befindet sich der Druckknopf also in einer Grundstellung, insbesondere wenn das Gepäckfach geöffnet ist.

Figur 3 zeigt die Ruhestellung RS des Löseelements 60 und wie daher das Arretiermittel 50 zu einer Arretierung des Zuschaltelements 34 bereit ist.

Figur 4 zeigt das Löseelement 60 in der Lösestellung LS und wie über das Hebelsystem 62 das Arretiermittel 50 in der Figur nach links zurückgezogen ist. Eine bestehende Arretierung des Zuschaltelements 34 wird daher gelöst bzw. eine erneute Arretierung ist nicht möglich. Figur 4 zeigt daher, wie durch das Löseelement 60 in der Lösestellung LS Rastmittel 58 und Gegenrastmittel 64 unverrastet auseinandergehalten sind.

Figur 4 illustriert durch Pfeile 42, wie nach Drücken des Druckknopfes in Druckrichtung bzw. Bewegungsrichtung 38 der Pin in den Druckknopf einfährt, sich das Hebelsystem 62 dreht und das Löseelement aus der Lösestellung LS in die Ruhestellung RS gelangt. Durch Drücken des Druckknopfes wird über die Drehbewegung der Hebelmechanik (Pfeile 44) der Bowdenzug in Zugrichtung 67 gezogen. Mit anderen Worten wird der Druckknopf ausgelöst und der Gasdruck in der Gasdruckfeder freigegeben. Der Pin rastet im Druckknopf ein

Figur 5 zeigt im Detail, wie das Arretiermittel 50 das Zuschaltelement 34 in der Zuschaltposition ZP arretiert. Das Rastmittel 58 in Form des Pins liegt in dem Gegenrastmittel 64 in Form der Sacklochbohrung ein, nachdem ausgehen von Figur 3 das Zuschaltelement 34 in Druckrichtung 38 niedergedrückt wurde und das Rastmittel 58 sich aufgrund des Spannelements 52 (Feder) in das Gegenrastmittel 64 hineinbewegt hat. Eine Bewegung des Zuschaltelements 34 entgegen der Druckrichtung 38 ist nun verhindert.

Figur 1 verdeutlicht, wie das Löseelement 60 wenigstens in der Offenstellung OS des Schwenkfaches 10 von außerhalb des Staufaches, nämlich von dessen Außenraum 24 her händisch betätigbar ist, um dieses in die Lösestellung LS zu bringen. Mit anderen Worten kann ein Flugbegleiter oder Passagier eine Verrastung des Zuschaltelements 34 in der Zuschaltposition ZP händisch wieder lösen, indem dieser mit der Hand in das offene Schwenkfach 10 hinter die Zuschalteinheit 30 greift und das Löseelement 60 niederdrückt. Die Kraftunterstützung für die Schließbewegung 22 des Schwenkfaches 10 wird so deaktiviert.

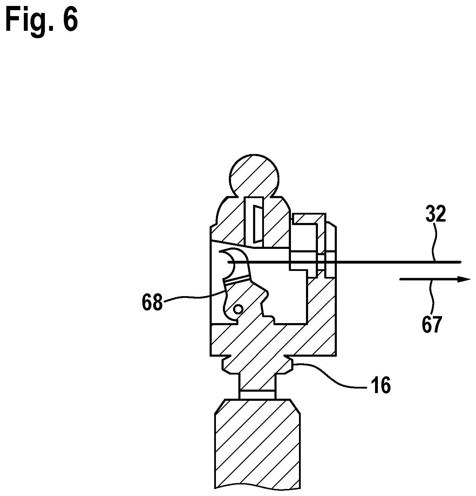

Figur 6 zeigt das in Fig. 2 obere Ende des Federmittels 16 im Detail mit dem Zugmittel 32, d.h. dem Bowdenzug mit Verbindung zum Druckknopf. Über das Zugmittel 32 wird das Federmittel 16 zwischen dem in Figur 6 gezeigten Passivzustand PZ und dem Aktivzustand AZ hin und her geschaltet. Die Schaltung in den Aktivzustand erfolgt durch Bewegen des Zuschaltelements 34 in Bewegungsrichtung 38, also händisches Drücken des Druckknopfes z.B. durch einen Passagier oder Flugbegleiter.

Hierdurch wird das Zugmittel 32 in Zugrichtung 67 gezogen, weshalb ein internes Stellelement 68, hier ein Hebel, im Federmittel 16 in der Figur 6 nach rechts bewegt wird und ein interner Pin ein in der Gasdruckfeder gedrückt gehalten wird, um deren Federeigenschaft zu aktivieren. Wird das Zugmittel (durch Bewegen des Zuschaltelements 34 entgegen der Bewegungsrichtung 38) entgegen der Zugrichtung 67 zurückgezogen, kippt der Hebel 68 in Figur 6 nach links und der interne Pin wird entlastet, die Federeigenschaft deaktiviert. Diese Rückbewegung wird durch eine nicht dargestellte, auf das Stellelement 68 wirkende, interne Feder im Federmittel 16 verursacht, die damit auch die Vorspannung des Zuschaltelements 34 in die Nullposition NP verursacht.

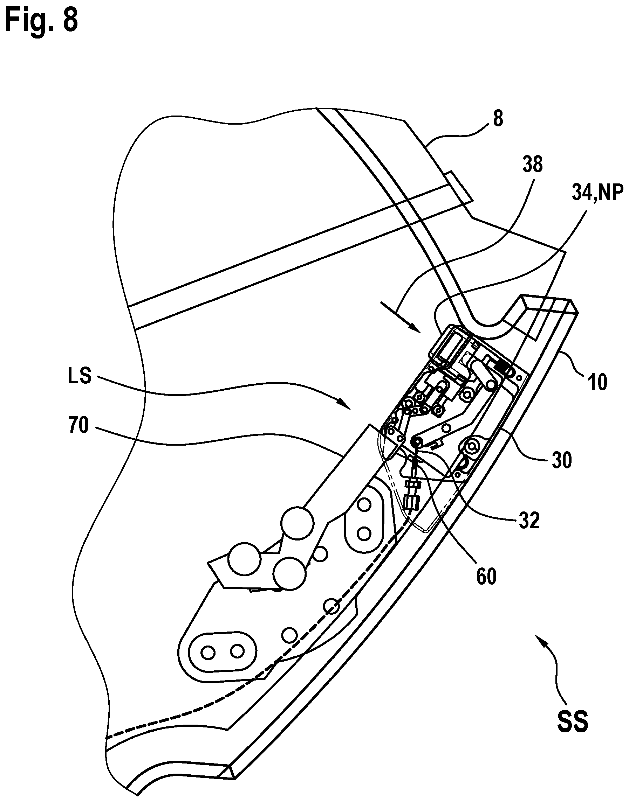

Figur 7 zeigt das Schwenkfach 10 im Schließzustand SS. Zu sehen ist hier - wie auch in Figur 1 - ein am Grundkörper 8 des Staufaches 4 befestigtes Gegenelement 70 für das Löseelement 60. Das Gegenelement 70 ist hier ein Winkel. In der in Figur 7 gezeigten Schließstellung SS des Schwenkfaches 10 fährt das Löseelement 60 gegen das Gegenelement 70 an und wird durch das Gegenelement 70 in die Lösestellung LS gebracht. Figur 7 zeigt dies im Überblick, Figur 8 im Detail.

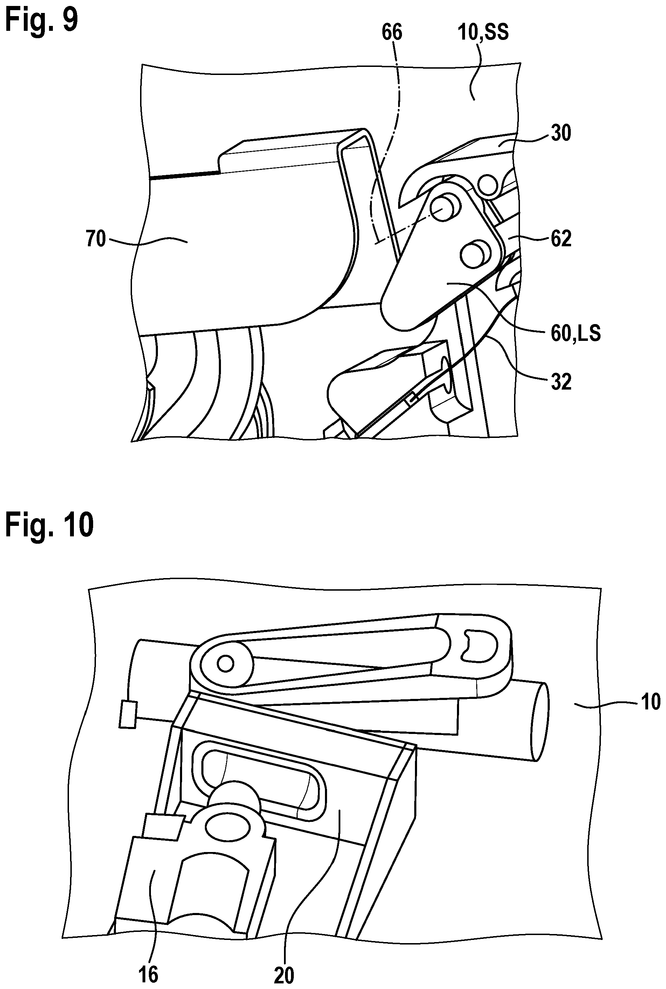

Figur 9 zeigt das Zusammenwirken zwischen Gegenelement 70 und Löseelement 60 in nochmals vergrößerter Detaildarstellung in einer perspektivischen Ansicht. Der Verlauf des Zugmittel 32 ist hier lediglich symbolisch durch eine Verlaufslinie angedeutet.

Insgesamt wird also der Hebel in Form des Löseelements 60 "nach unten" gedrückt, was die Drehbewegung (entgegen der Pfeile 42, siehe Figur 4) des Hebelsystems 62 und das Zurückziehen des Pins aus dem Druckknopf verursacht. Die Vorspannkraft des internen Pins an der Gasdruckfeder (wirkt auf Hebel 68 in Figur 6) drückt also den Druckknopf wieder "nach oben", also entgegen der Bewegungsrichtung 38.

Ausgehend von Figur 7 gilt dann: Beim Öffnen des Gepäckfachs (Schwenkfach 10 von der Schließstellung SS in die Offenstellung OS) wird der Kolben der Gasdruckfeder wieder komprimiert im Zylinder und arretiert in der unteren (komprimierten) Stellung. Dies geschieht über eine Kugel auf Seiten der Gasdruckfeder, siehe Figur 10. Gepäckfachseitig (Schwenkfach 10) ist ein Haltersystem angebracht die die Kugelaufnahme 20 aufweist.

Figur 10 schließlich illustriert das Zusammenspiel zwischen dem Federmittel 16 bzw. der Gasfederkugel und der Kugelaufnahme 20 aus Figur 2 in einer perspektivischen Ansicht.

### Bezugszeichenliste

- 2: Flugzeug
- 4: Staufach
- 6: Grundstruktur
- 8: Grundkörper
- 10: Schwenkfach
- 12: Schwenkachse (Schwenkfach)
- 14: Federeinheit
- 16: Federmittel
- 18: Öldämpfer
- 20: Kugelaufnahme
- 22: Schließbewegung
- 24: Außenraum (Staufach)
- 26: Haltersystem
- 30: Zuschalteinheit
- 32: Zugmittel
- 34: Zuschaltelement
- 38: Bewegungsrichtung
- 40: Hebelmechanik (Zuschaltelement)
- 42: Pfeil
- 44: Pfeil
- 50: Arretiermittel
- 52: Spannelement (Arretiermittel)
- 54: Spannrichtung
- 56: Schlitten
- 58: Rastmittel
- 60: Löseelement
- 62: Hebelsystem
- 64: Gegenrastmittel
- 66: Schwenkachse (Löseelement)
- 67: Zugrichtung
- 68: Stellelement
- 70: Gegenelement (Löseelement)
- M: Montagezustand
- OS: Offenstellung
- SS: Schließstellung
- AZ: Aktivzustand
- PZ: Passivzustand
- NP: Nullposition
- ZP: Zuschaltposition
- RS: Ruhestellung
- LS: Lösestellung
- L1,2: Länge

## Patentansprüche

1. Staufach (4) für ein Flugzeug (2),
- mit einem an einer Grundstruktur (6) des Flugzeuges (2) fixierbaren Grundkörper (8),
- mit einem zwischen einer Offenstellung (OS) und einer Schließstellung (SS) schwenkbar gelagerten Schwenkfach (10),
- mit einer an dem Grundkörper (8) und dem Schwenkfach (10) befestigten und mit diesen bewegungsgekoppelten Federeinheit (14), die zwischen einem Aktivzustand (AZ) und einem Passivzustand (PZ) schaltbar ist,
- wobei im Aktivzustand (AZ) eine Entspannung eines Federmittels (16) der Federeinheit (14) zur Erzeugung einer Schließkraft am Schwenkfach (10) in Richtung von der Offenstellung (OS) zur Schließstellung (SS) hin ermöglicht ist,
- wobei im Passivzustand (PZ) die Entspannung des Federmittels (16) verhindert ist,
- mit einer mit der Federeinheit (14) wirkungsgekoppelten Zuschalteinheit (30) mit einem aus einer Nullposition (NP) in eine Zuschaltposition (ZP) bringbaren Zuschaltelement (34), wobei die Federeinheit (14) in der Nullposition (NP) in den Passivzustand (PZ) und in der Zuschaltposition (ZP) in den Aktivzustand (AZ) geschaltet ist,
- wobei das Zuschaltelement (34) zur Nullposition (NP) hin vorgespannt ist,
- wobei die Zuschalteinheit (30) ein Arretiermittel (50) für das Zuschaltelement (34) in der Zuschaltposition (ZP) aufweist,
- wobei das Arretiermittel (50) auf die Arretierung des Zuschaltelements (34) hin vorgespannt ist,
- wobei die Zuschalteinheit (30) ein aus einer Ruhestellung (RS) in eine Lösestellung (LS) betätigbares Löseelement (60) für das Arretiermittel (50) aufweist,
- wobei das Löseelement (60) zur Ruhestellung (RS) hin vorgespannt ist,
- wobei in der Ruhestellung (RS) ein Arretieren des Zuschaltelements (34) in der Zuschaltposition (ZP) durch das Arretiermittel (50) ermöglicht und in der Lösestellung (LS) verhindert ist.

2. Staufach (4) nach Anspruch 1,
**dadurch gekennzeichnet, dass**
die Zuschalteinheit (30) eine Druckknopfeinheit ist und das Zuschaltelement (34) ein Druckknopf ist, der aus der Nullposition (NP) in die Zuschaltposition (ZP) drückbar ist.

3. Staufach (4) nach einem der vorhergehenden Ansprüche,
**dadurch gekennzeichnet, dass**
die Zuschalteinheit (30) über ein Zugmittel (32) mit der Federeinheit (14) wirkungsgekoppelt ist.

4. Staufach (4) nach einem der vorhergehenden Ansprüche,
**dadurch gekennzeichnet, dass**
das Zuschaltelement (34) durch eine Rückstellkraft von außerhalb der Zuschalteinheit (30) von der Zuschaltposition (ZP) zur Nullposition (NP) hin vorgespannt ist.

5. Staufach (4) nach einem der vorhergehenden Ansprüche,
**dadurch gekennzeichnet, dass**
die Federeinheit (14) als Federmittel (16) eine Gasdruckfeder enthält.

6. Staufach (4) nach Anspruch 5,
**dadurch gekennzeichnet, dass**
die Federeinheit (14) dadurch zwischen Aktiv- (AZ) und Passivzustand (PZ) umgeschaltet ist, dass ein federnd vorgespanntes Stellelement (68) der Gasdruckfeder betätigt ist.

7. Staufach (4) nach einem der vorhergehenden Ansprüche,
**dadurch gekennzeichnet, dass**
am Grundkörper (8) oder an der Grundstruktur (6) ein Gegenelement (70) für das Löseelement (60) angebracht ist, wobei wenigstens in der Schließstellung (SS) des Schwenkfaches (10) das Löseelement (60) durch das Gegenelement (70) in die Lösestellung (LS) gebracht ist.

8. Staufach (4) nach einem der vorhergehenden Ansprüche,
**dadurch gekennzeichnet, dass**
das Löseelement (60) wenigstens in der Offenstellung (OS) des Schwenkfaches (10) für eine händische Betätigung von einem Außenraum (24) außerhalb des Staufaches (4) wenigstens zur Lösestellung (LS) hin zugänglich ist.

9. Staufach (4) nach einem der vorhergehenden Ansprüche,
**dadurch gekennzeichnet, dass**
das Löseelement (60) ein zwischen der Lösestellung (LS) und der Ruhestellung (RS) schwenkbarer Kipphebel ist.

10. Staufach (4) nach einem der vorhergehenden Ansprüche,
**dadurch gekennzeichnet, dass**
- das Arretiermittel (50) ein quer zu einer Bewegungsrichtung (38) des Zuschaltelements (34) bewegbares Rastmittel (58), das auf das Zuschaltelement (34) hin vorgespannt ist,
- und das Zuschaltelement (34) ein Gegenrastmittel (64) aufweist,
- wobei das Arretieren des Zuschaltelements (34) durch Einrasten von Rastmittel (58) und Gegenrastmittel (64) in der Zuschaltposition (ZP) bewirkt ist,
- wobei durch das Löseelement (60) in Lösestellung (LS) das Rastmittel (58) und das Gegenrastmittel (58) unverrastbar auseinander gehalten sind.

11. Staufach (4) nach einem der vorhergehenden Ansprüche,
**dadurch gekennzeichnet, dass**
das Staufach (4) keine elektrischen Komponenten enthält und / oder die Umschaltung zwischen Aktiv- (AZ) und Passivzustand (PZ) unabhängig von einer Beladung des Staufaches (4) ist.

12. Flugzeug (2),
- mit einer Grundstruktur (6),
- mit einem Staufach (4) nach einem der vorhergehenden Ansprüche,
- wobei der Grundkörper (8) an der Grundstruktur (6) fixiert ist.

## Claims

1. Stowage compartment (4) for an aircraft (2),
- with a main body (8) which can be fixed to a basic structure (6) of the aircraft (2),
- with a swivelling compartment (10) mounted so as to swivel between an open position (OS) and a closed position (SS),
- with a spring unit (14) which is fastened to the main body (8) and the swivelling compartment (10), is motion-coupled to the latter and can be switched between an active state (AZ) and a passive state (PZ),
- wherein, in the active state (AZ), relaxation of a spring means (16) of the spring unit (14) for generating a closing force on the swivelling compartment (10) in the direction from the open position (OS) to the closed position (SS) is enabled,
- wherein, in the passive state (PZ), the spring means (16) is prevented from relaxing,
- with a connection unit (30) which is operatively coupled to the spring unit (14) and has a connection element (34) which can be brought from a zero position (NP) into a connection position (ZP), wherein the spring unit (14) is switched into the passive state (PZ) in the zero position (NP) and into the active state (AZ) in the connection position (ZP),
- wherein the connection element (34) is biased towards the zero position (NP),
- wherein the connection unit (30) has a locking means (50) for the connection element (34) in the connection position (ZP),
- wherein the locking means (50) is biased towards the locking of the connection element (34),
- wherein the connection unit (30) has, for the locking means (50), a release element (60) which can be actuated from a rest position (RS) into a release position (LS),
- wherein the release element (60) is biased towards the rest position (RS),
- wherein, in the rest position (RS), locking of the connection element (34) in the connection position (ZP) is enabled by the locking means (50) and prevented in the release position (LS).

2. Stowage compartment (4) according to Claim 1,
**characterized in that**
the connection unit (30) is a push-button unit and the connection element (34) is a push-button which can be pressed from the zero position (NP) into the connection position (ZP).

3. Stowage compartment (4) according to one of the preceding claims,
**characterized in that**
the connection unit (30) is operatively coupled to the spring unit (14) via a pulling means (32).

4. Stowage compartment (4) according to one of the preceding claims,
**characterized in that**
the connection element (34) is biased from the connection position (ZP) towards the zero position (NP) by a restoring force from outside the connection unit (30).

5. Stowage compartment (4) according to one of the preceding claims,
**characterized in that**
the spring unit (14) contains a gas pressure spring as spring means (16).

6. Stowage compartment (4) according to Claim 5,
**characterized in that**
the spring unit (14) is switched between the active state (AZ) and passive state (PZ) by actuating a resiliently pretensioned actuating element (68) of the gas pressure spring.

7. Stowage compartment (4) according to one of the preceding claims,
**characterized in that**
a counter element (70) for the release element (60) is attached to the main body (8) or to the basic structure (6), wherein the release element (60) is brought into the release position (LS) by the counter element (70) at least in the closed position (SS) of the swivelling compartment (10).

8. Stowage compartment (4) according to one of the preceding claims,
**characterized in that**
the release element (60) is accessible, at least in the open position (OS) of the swivelling compartment (10), for manual actuation from an external space (24) outside the stowage compartment (4) at least towards the release position (LS).

9. Stowage compartment (4) according to one of the preceding claims,
**characterized in that**
the release element (60) is a rocker lever that can be swivelled between the release position (LS) and the rest position (RS).

10. Stowage compartment (4) according to one of the preceding claims,
**characterized in that**
- the locking means (50) is a latching means (58) which is movable transversely to a direction of movement (38) of the connection element (34) and which is biased towards the connection element (34),
- and the connection element (34) has a counter latching means (64),
- wherein the locking of the connection element (34) is effected by the engagement of latching means (58) and counter latching means (64) in the connection position (ZP),
- wherein the latching means (58) and the counter latching means (58) are held apart, unlatchably, by the release element (60) in the release position (LS).

11. Stowage compartment (4) according to one of the preceding claims,
**characterized in that**
the stowage compartment (4) does not contain any electrical components and / or the switchover between active state (AZ) and passive state (PZ) is independent of a load in the stowage compartment (4).

12. Aircraft (2),
- with a basic structure (6),
- with a stowage compartment (4) according to one of the preceding claims,
- wherein the main body (8) is fixed to the basic structure (6).

## Revendications

1. Compartiment de rangement (4) pour un aéronef (2),
- comprenant un corps de base (8) qui peut être calé au niveau d'une structure de base (6) de l'aéronef (2),
- comprenant un compartiment pivotant (10) monté pivotant entre une position ouverte (OS) et une position fermée (SS),
- comprenant une unité de ressort (14), fixée au corps de base (8) et au compartiment pivotant (10) et couplée en mouvement à ceux-ci, laquelle peut être commutée entre un état actif (AZ) et un état passif (PZ),
- à l'état actif (AZ), une détente d'un moyen formant ressort (16) de l'unité de ressort (14) étant possible afin de générer une force de fermeture au niveau du compartiment pivotant (10) de la position ouverte (OS) en direction de la position fermée (SS),
- à l'état passif (PZ), la détente du moyen formant ressort (16) étant empêchée,
- comprenant une unité d'activation (30) couplée fonctionnellement à l'unité de ressort (14) et pourvue d'un élément d'activation (34) qui peut être amené d'une position zéro (NP) à une position d'activation (ZP), l'unité de ressort (14) étant commutée à l'état passif (PZ) dans la position zéro (NP) et à l'état actif (AZ) dans la position d'activation (ZP),
- l'élément d'activation (34) étant précontraint vers la position zéro (NP),
- l'unité d'activation (30) possédant un moyen de blocage (50) pour l'élément d'activation (34) dans la position d'activation (ZP),
- le moyen de blocage (50) étant précontraint dans le sens du blocage de l'élément d'activation (34),
- l'unité d'activation (30) possédant un élément de libération (60) pour le moyen de blocage (50), lequel peut être actionné d'une position de repos (RS) à une position de libération (LS),
- l'élément de libération (60) étant précontraint vers la position de repos (RS),
- dans la position de repos (RS), un blocage de l'élément d'activation (34) dans la position d'activation (ZP) étant rendu possible par le moyen de blocage (50) et empêché dans la position de libération (LS).

2. Compartiment de rangement (4) selon la revendication 1,
**caractérisé en ce que**
l'unité d'activation (30) est une unité à bouton-poussoir et l'élément d'activation (34) est un bouton-poussoir qui peut être enfoncé de la position zéro (NP) à la position d'activation (ZP).

3. Compartiment de rangement (4) selon l'une des revendications précédentes,
**caractérisé en ce que**
l'unité d'activation (30) est couplée à l'unité de ressort (14) par le biais d'un moyen de traction (32).

4. Compartiment de rangement (4) selon l'une des revendications précédentes,
**caractérisé en ce que**
l'élément d'activation (34) est précontraint par une force de rappel provenant de l'extérieur de l'unité d'activation (30) de la position d'activation (ZP) vers la position zéro (NP).

5. Compartiment de rangement (4) selon l'une des revendications précédentes,
**caractérisé en ce que**
l'unité de ressort (14) contient un ressort pneumatique en tant que moyen formant ressort (16).

6. Compartiment de rangement (4) selon la revendication 5,
**caractérisé en ce que**
l'unité de ressort (14) est permutée entre l'état actif (AZ) et l'état passif (PZ) par l'actionnement d'un élément de commande (68) précontraint par ressort du ressort pneumatique.

7. Compartiment de rangement (4) selon l'une des revendications précédentes,
**caractérisé en ce que**
un élément homologue (70) pour l'élément de libération (60) est monté sur le corps de base (8) ou sur la structure de base (6), l'élément de libération (60) étant amené dans la position de libération (LS) par l'élément homologue (70) au moins dans la position de fermeture (SS) du compartiment pivotant (10).

8. Compartiment de rangement (4) selon l'une des revendications précédentes,
**caractérisé en ce que**
l'élément de libération (60), au moins dans la position ouverte (OS) du compartiment pivotant (10), est accessible pour un actionnement manuel depuis un espace extérieur (24) en dehors du compartiment de rangement (4), au moins vers la position de libération (LS).

9. Compartiment de rangement (4) selon l'une des revendications précédentes,
**caractérisé en ce que**
l'élément de libération (60) est un levier basculant qui peut pivoter entre la position de libération (LS) et la position de repos (RS).

10. Compartiment de rangement (4) selon l'une des revendications précédentes,
**caractérisé en ce que**
- le moyen de blocage (50) possède un moyen d'encliquetage (58), mobile transversalement à une direction de mouvement (38) de l'élément d'activation (34) et précontraint vers l'élément d'actionnement (34),
- et l'élément d'actionnement (34) possède un moyen d'encliquetage homologue (64),
- le blocage de l'élément d'actionnement (34) étant provoqué par l'encliquetage du moyen d'encliquetage (58) et du moyen d'encliquetage homologue (64) dans la position d'actionnement (ZP),
- le moyen d'encliquetage (58) et le moyen d'encliquetage homologue (58) étant maintenus écartés l'un de l'autre par l'élément de libération (60) en position de libération (LS) de manière à ce qu'ils ne puissent pas s'encliqueter.

11. Compartiment de rangement (4) selon l'une des revendications précédentes,
**caractérisé en ce que**
le compartiment de rangement (4) ne contient pas de composants électriques et/ou la permutation entre l'état actif (AZ) et l'état passif (PZ) est indépendante d'un chargement du compartiment de stockage (4).

12. Aéronef (2),
- comprenant une structure de base (6),
- comprenant un compartiment de rangement (4) selon l'une des revendications précédentes,
- le corps de base (8) étant calé au niveau de la structure de base (6).
